# EUROPEAN PATENT SPECIFICATION

(11) **EP 1 662 398 B1**
(45) Date of publication and mention of the grant of the patent: **13.08.2008**
(21) Application number: 05025995.1
(22) Date of filing: 29.11.2005
(51) Int. Cl.: G06F 11/36

(54) **Apparatus and method for observing runtime behavior of an application program**
Vorrichtung und Verfahren zur Beobachtung des Laufzeitverhaltens eines Anwendungsprogramms
Dispositif et procédé pour observer le comportement d'un programme à runtime

(30) Priority: 30.11.2004 US 999315
(43) Date of publication of application: 31.05.2006
(73) Proprietor: SAP AG, 69190 Walldorf (DE)
(72) Inventor: De Boe, Benjamin, Kontich 2550 (BE); Rits, Martin E., Nice 06300 (FR)
(74) Representative: Müller-Boré & Partner Patentanwälte

(56) References cited:
- US-A1- 2002 091 995
- US-B1- 6 738 965
- MARIO WOLCZKO: "Using a Tracing Java Virtual Machine to gather data on the behavior of Java Programs" SML 98-0154, [Online] 22 March 1999 (1999-03-22), pages 1-14, XP002375976 Retrieved from the Internet: URL:http://research.sun.com/people/mario/t racing-jvm/tracing.pdf> [retrieved on 2006-04-06]
- CZAJKOWSKI G ET AL: "Automated and portable native code isolation" SOFTWARE RELIABILITY ENGINEERING, 2001. ISSRE 2001. PROCEEDINGS. 12TH INTERNATIONAL SYMPOSIUM ON 27-30 NOV 2001, PISCATAWAY, NJ, USA,IEEE, 27 November 2001 (2001-11-27), pages 298-307, XP010583160 ISBN: 0-7695-1306-9

## Description

### FIELD OF THE INVENTION

The inventions relate generally to the field of multi-layered application program. More particularly, the invention relates to a method and apparatus for observing runtime behavior of an application program.

### BACKGROUND OF THE INVENTION

Advanced application programs may be formed by using multiple application layers. To achieve desired application program functionality, each application layer is assigned a specific responsibility. Some common examples of application layers of a multi-layer application include a database layer, a network interaction layer, an application layer, a user interface layer and the like.

Currently, secure software engineering research exists for describing and enforcing fine-grained access control policies in distributed as well as multi-layered environments. Such research enables the design of multi-layer applications, such as, for example, a three-layer application including a workflow layer, an application layer and a database layer. For each layer, specification of access control is required, such that the three different access control policies can map together to ensure a secure application.
US-B1-6 738 965 discloses a virtual machine in an object-oriented system including an interpreter. In order to provide trace information from a program about specific method calls, a user defines a selection of methods to be traced.
As the program runs on the interpreter, it is determined, whether or not the method is included within the selection to be traced. For those methods included within the selection, trace information about the method call is outputted. A method block is associated with each method and is used by the interpreter to invoke the method. For each method within the user-defined selection, a flag is set within the method block associated with the method. The status of the flag is checked when the interpreter invokes a method, in order to determine whether or not the method is included within the selection.
Czajkowski et al.: "Automated and portable native code isolation", Software Reliability Engineering, 2001, ISSRE 2001. Proc. of 12th International Symposium on 27-3 Nov. 2001, Piscataway, NJ, USA, IEEE, 27 November 2001, pp. 2978-307 discloses automated and portable native code isolation. A highly portable and JVM-independent infrastructure for automated and transparent execution of user-supplied native code in a separate process has been designed. A high level system consists of two processes; the first one, j-process, executes the JVM and the application written in the Java programming language. The second one, n-process, acts as a server processing requests to execute native methods, and is linked with the original user-supplied native library (*I-orig*.). In order to achieve JVM-independence, a native library with the same name and exported symbols must be produced so that it can be loaded by the application executing in *j-process,* called *I-proxies.* It is generated through an automated analysis of the symbol table of *I-orig.* All names of defined functions starting with Java_ and JNI_ are used to generate a source file, in which all these functions are redefined to ship all of their arguments along with an integer uniquely identifying the function to *n-process.* Upon receipt of such a message, *n-process* executes the requested function with the supplied arguments. Each JNI function takes a JNI environment interface pointer as its first argument. This simplifies the handling of upcalls.
Nicholas Lesiecki: "Improve modularity with aspect-oriented programming", Technical Team Lead, eBlox, Inc, 01.01.2002, discloses a method to improve modularity with Aspect Oriented Programming based on aspects where aspects contain pointcuts and devices. It is shown how the use of aspects to log method calls can be particularly beneficial to tracing and debugging.

As indicated above, to achieve application program functionality, the layers are generally required to interact with one another. Most interaction adheres to one pattern: methods of the upper layer petition services of the lower layer with returned information from the lower layer flowing upwards to the upper layers. As described herein, the issuance of a call, such as, for example, within a method or other programming language terminology to specify a block of code, such as, for example, a method, a function, a procedure or other like terminology, including a statement or call directed to some lower layer resource, is described herein as a "downcall." Generally, determining information on which downcalls invoke critical methods or procedures, is performed by manually reading through the multi-layered application program code.
According to the present invention, a method having the features of claim 1, a machine accessible medium having the features of claim 6 and a system having the features of claim 10 are provided. Preferred embodiments are defined in the dependent claims.

### BRIEF DESCRIPTION OF THE DRAWINGS

The various embodiments of the present invention are illustrated by way of example, and not by way of limitation, in the figures of the accompanying drawings and in which:

FIG. 1 is a block diagram illustrating a computer system for observing runtime behavior of an application program, in accordance with one embodiment.

FIG. 2 is a block diagram further illustrating a downcall sniffer module of FIG. 1, in accordance with one embodiment.

FIG. 3 is a block diagram illustrating downcall detection of calls issued by an executing input program directed to a program target within a lower application layer, in accordance with one embodiment.

FIG. 4 is a block diagram illustrating the operation of program modules to enable runtime observation of an input application program, in accordance with one embodiment.

FIG. 5 is a block diagram illustrating configuration manager modules for determining at least a user-specified program target with which to observe runtime program behavior, in accordance with one embodiment.

FIG. 6 illustrates class diagrams used to implement a configuration manager, in accordance with one embodiment.

FIG. 7 illustrates class diagrams to provide a program target with which to observe runtime behavior of an input program, in accordance with one embodiment.

FIG. 8 illustrates class diagrams for executing the input program to observe the runtime behavior thereof, in accordance with one embodiment.

FIG. 9 illustrates class diagrams for implementing report module to report detected downcalls directed to a program target, in accordance with one embodiment.

FIG. 10 illustrates class diagrams illustrating an output type for providing the report of detected downcalls within an input program, in accordance with one embodiment.

### DETAILED DESCRIPTION

In the following description, certain terminology is used to describe features of the invention. For example, the term "logic" is representative of hardware and/or software configured to perform one or more functions. For instance, examples of "hardware" include, but are not limited or restricted to, an integrated circuit, a finite state machine or even combinatorial logical. The integrated circuit may take the form of a processor such as a microprocessor, application specific integrated circuit, a digital signal processor, a microcontroller, or the like.

An example of "software" includes executable code in the form of an application, an applet, a routine or even a series of instructions. The software may be stored in any type of computer or machine readable medium such as a programmable electronic circuit, a semiconductor memory device inclusive of volatile memory (e.g., random access memory, etc.) and/or non-volatile memory (e.g., any type of read-only memory "ROM," flash memory), a floppy diskette, an optical disk (e.g., compact disk or digital video disk "DVD"), a hard drive disk, tape, or the like.

### System

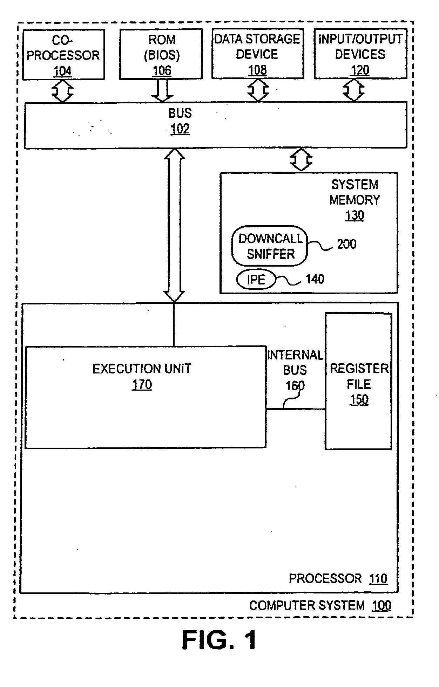

FIG. 1 shows a computer system 100 upon which one embodiment of observing runtime behavior of an application program can be implemented. Computer system 100 comprises a bus 102 for communicating information, and processor 110 coupled to bus 102 for processing information. Representatively, computer system 100 includes data storage device 108 and input/output (I/O) devices 120 coupled to bus 102. The computer system 100 also includes a system memory 130 coupled to bus 102 for storing information and instructions for processor 110, as well as optional co-processor 140. Processor 110 includes an execution unit 170 coupled to register file 150 via internal bus 160.

The system memory 130 may include high speed, temporary memory that is used by execution unit 170 to store frequently and/or recently used information for processor 110. As described herein, system memory 130 includes but is not limited to solid state memories, random access memory (RAM), non-volatile RAM (NVRAM), static RAM (SRAM), dynamic RAM (DRAM), synchronous DRAM (SDRAM), double rate (DDR) SDRAM, Rambus DRAM (RDRAM) or any device capable of supporting high speed buffering of data. In one embodiment, data storage device 108 includes one or more hard disks, floppy disks, ZIP disks, magnetic random access memory (MRAM) devices, and other system readable media that store instructions and/or data. Data storage device 108 may store program modules such as routines, programs, objects, images, data structures, program data, and other program modules that perform particular tasks or implement particular abstract data types that facilitate system use.

In one embodiment, execution unit 170 operates on image/video data according to the instructions received by processor 110. Execution unit 170 also operates on packed, floating-point and scalar data according to instructions implemented in general-purpose processors. In some embodiments, processor 110 may be an Intel 32-bit (IA-32) architecture. In another embodiment, the processor may have an Advanced Micro Devices 64-bit (AMD-64) architecture, an Intel EM64T architecture or an Intel IA-64 architecture that executes IA-32 code. The foregoing implies that the processor may use an IA-32 instruction set or an AMD-64 instruction set, respectively. In another embodiment, the processor 110 may be any processor that executes machine code generated from a Java compiler.

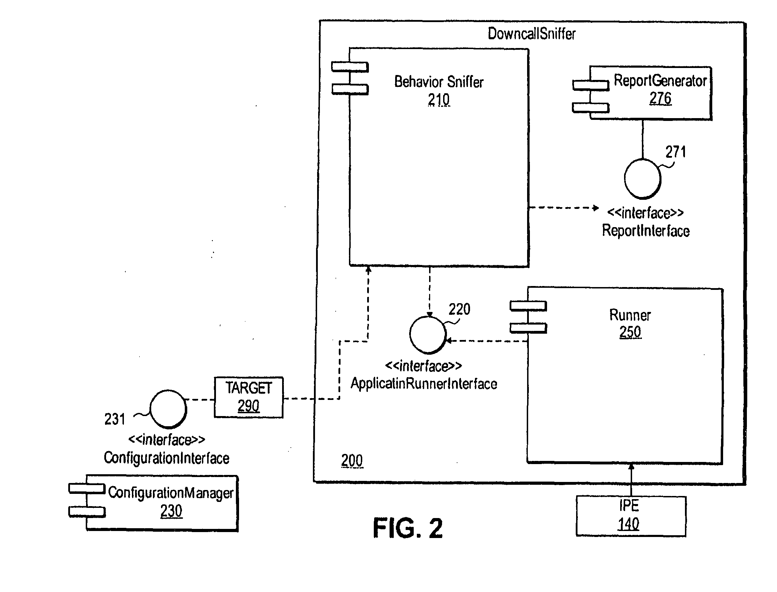

FIG. 2 is a block diagram further illustrating downcall sniffer module 200 of FIG. 1, in accordance with one embodiment. Representatively, downcall sniffer 200 includes behavior sniffer module 210. In one embodiment, behavior sniffer module 210 launches an input program executable (IPE) 140 using runner module 250 via application runner interface 220. Once IPE 140 begins executing, behavior sniffer module 210 observes the application to spot downcalls issued by the executing IPE to, for example, a lower application program layer, including program target 290.

In one embodiment, configuration manager 230 abstracts configuration settings for IPE 140. Such abstractions may include at least one program target 290, an input program path, a report format and other like information required to enable observation of an input program runtime behavior. In one embodiment, application runner interface 220 utilizes configuration interface 231 to determine where the input program or application is located. In one embodiment, this interface obstructs the processes needed to initialize and launch the desired type of program.

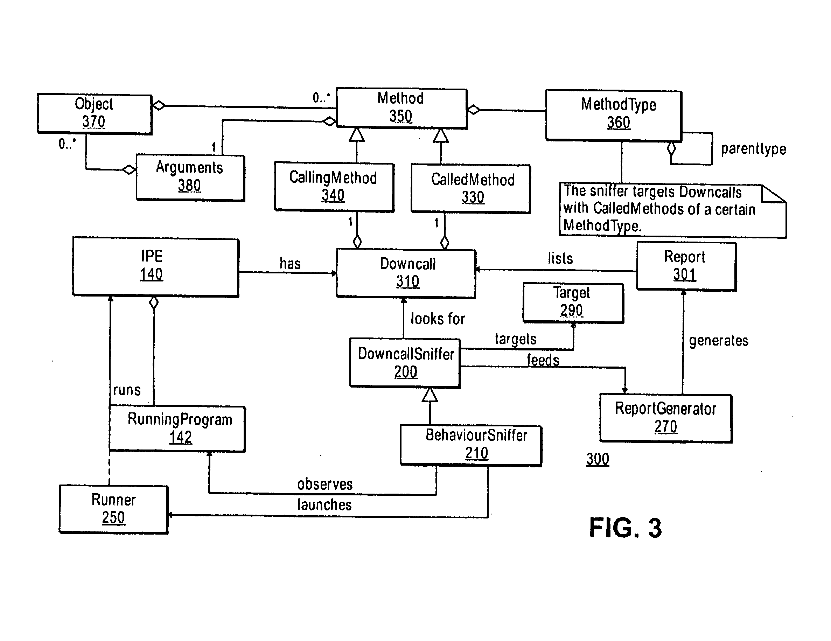

FIG. 3 is a block diagram 300 illustrating detection of downcalls issued by IPE 140 during runtime (running program 142), which are directed to an application target within an underlying layer of an input program, in accordance with one embodiment. Representatively, sniffer module 200, using behavior sniffer 210, observes running program 142, which is launched by runner 250. Behavior sniffer 210 observes running program 142 to determine whether the running program has issued a downcall 310, which matches at least one program target 290. When a matching downcall is detected, the matching downcall is registered with report generator module 270, which is responsible for generating report 301, which lists all detected downcalls directed to program target 290.

Representatively, the downcall sniffer 200 extracts a report on all downcalls issued by a procedure function, method or other like program construct, referred to herein as "calling methods" in the input application, which issue a call or invoke a method, procedure or the like block of program code offered by an underlying layer and specifically, the target 290. The target, or method looked for ("called methods") should not be hard coded, such that users should be able to check which methods to look for at launch time. Accordingly, in one embodiment, for each detected downcall 310, report 301 lists the signature of the calling method, the signature of the called method and the arguments passed to the calling method. In one embodiment, this output is provided as an XML format, as shown in Table 1.

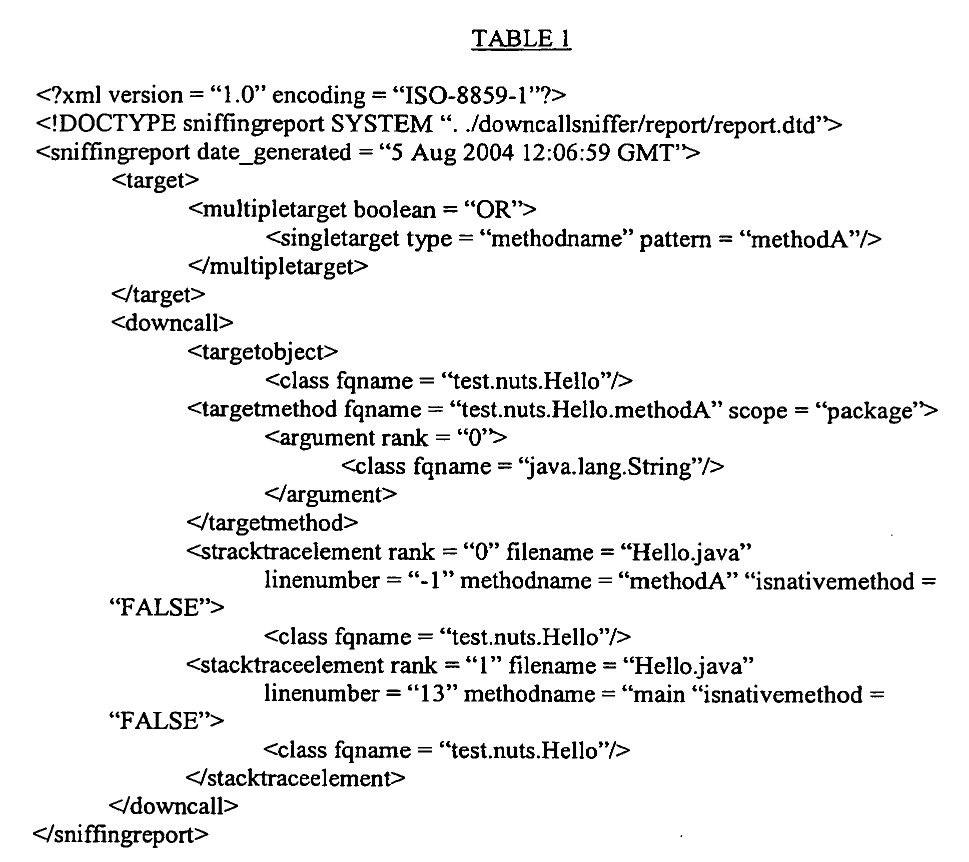

Referring again to FIG.3 as described herein, method 350 is the domain specific concept corresponding to a method or function in the program code. A method 350 has an object 370 in which it is registered and an argument list. Object 370 symbolizes an object or class, which would have a certain amount of methods listed in it. An object has a class as its major property. Arguments 380 encapsulate the argument list of a given method. Method type 360 describes a method type, which is used by downcall sniffer 200 to extract information on calling methods, calling a method of a certain type (i.e., a database call).

As described above, calling method 340 is a method which calls the target method, so one level down the stack trace viewed from the calling method point of view. Called method 330 is a method calling the body of another method, the calling method, and downcall 310 is a call to a method from within the body of another method and lists the calling method and the called method as its properties. The object from which the call originates is the object of the calling method. In one embodiment, this information, along with a stack trace (defined herein as a succession of method calls beginning at an upper program layer and terminating at the called method, or target) are provided in report 301.

In one embodiment, the downcall sniffer module 200 is a modular tool, which examines a given application using aspect-oriented programming to observe the behavior of a running input program 142. Accordingly, in one embodiment, using aspect-oriented programming (AOP), at least one aspect is created to detect targeted downcalls 310. Once the at least one aspect is provided, advice is added to the targeted methods to export detected downcalls to a report 310.

Accordingly, in one embodiment, behavior sniffing aspects are first weaved into the existing code, then the application is launched to test every course of action within the input program. Finally, report 301 is generated to automatically provide detected downcalls 310. In one embodiment, a point cut is added to each method within the input program. Accordingly, for each method invocation issued by a method within the input program, advice is added to the point cut to compare the method invocation against the program target 290, such that when a downcall 310 is detected, the advice exports the detected downcall 310 to a report output file 301.

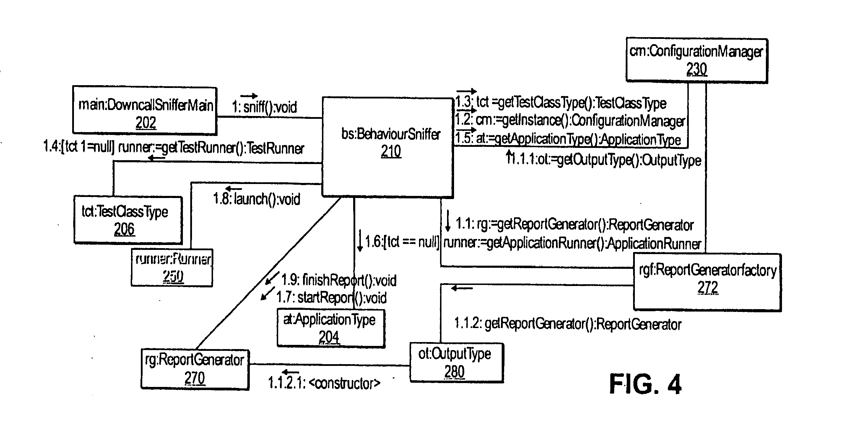

FIG. 4 is a collaboration diagram pointing out the behavior of behavior sniffer 210, in accordance with one embodiment. Once invoked by downcall sniffer main 202, behavior sniffer 210 detects all downcalls issued by an input program during runtime, which match a certain target within an input application program. In operation, a user registers the path of the input application in a sniffer configuration file *(See,* Table 2). In addition, the user registers a target in the sniffer configuration file and launches the sniffer tool using downcall sniffer main 202. In response, behavior sniffer 210 checks whether the input is valid. If the input is valid, the system executes the input application using runner 250 and observes the behavior of the application.

In one embodiment, sniffer 210 registers all downcalls directed to a certain program target in the input application. Once detected, report generator factory 272 generates a report, including all downcalls, based on an output type 280. Accordingly, downcall sniffer module 200 may be comprised of three components, in accordance with one embodiment. Such components may include behavior sniffer module 210, which performs the actual sniffing tasks, a report generating component 272 for providing a listing of detected downcalls and a runner component 250 for handling the running of the input program.

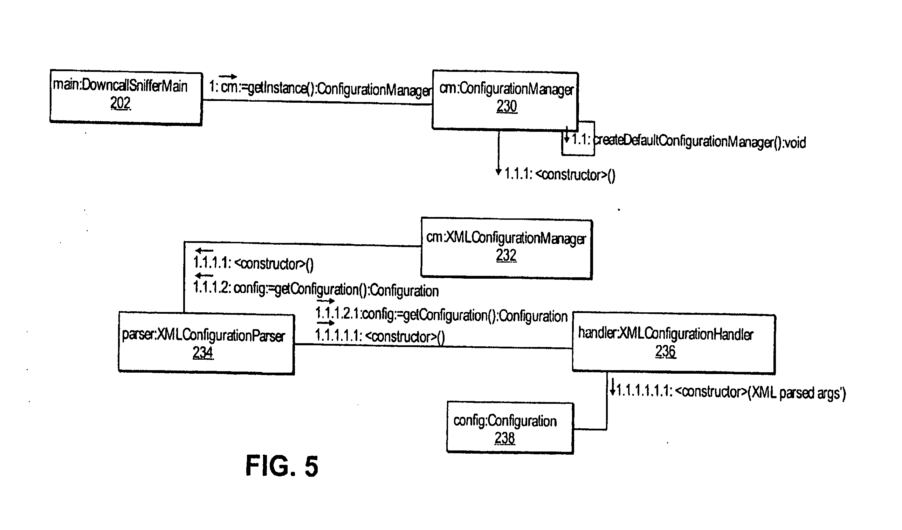

FIG. 5 is a block diagram illustrating diagrams describing the operation of configuration manager 230. Representatively, the configuration manager 230 determines a report format and at least one program target, as well as locations of any access files, such as the input program.

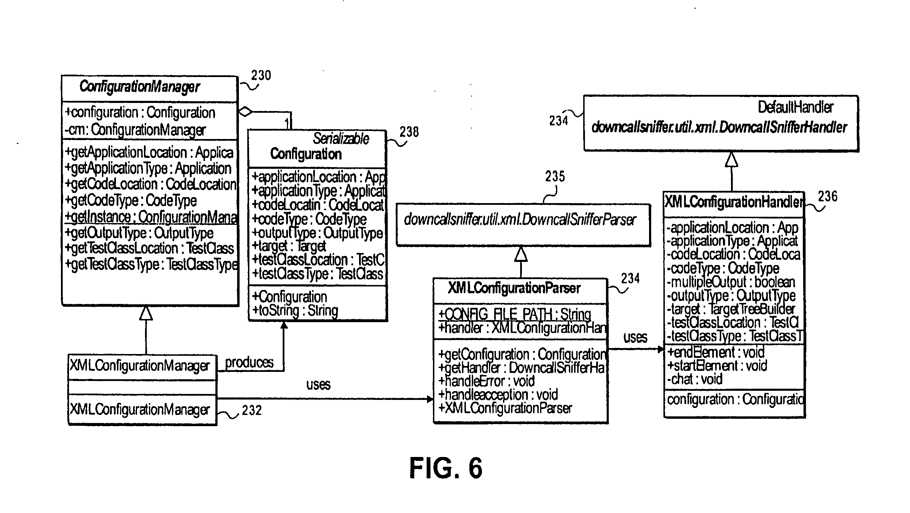

FIG. 6 illustrate class diagrams for implementing configuration manager 230. Representatively, the configuration manager utilizes XML configuration manager 232 to produce configuration 238 according to XML configuration parser 234 and XML configuration handler 236. Representatively, configuration 238 may include an application location, an application location type, a code location, a code location type, an output type and a target. Using such information, behavior sniffer 210 is able to execute the input application program to detect runtime downcalls directed to the program target.

Configuration interface 231 *(See,* FIG. 2) is a unified way for other components of the system to get the type, location or other properties of the application to be examined. Featured services of configuration interface include:

(1) **gettarget.** This method returns a target object describing the called method for which the downcalls should be extracted;

(2) **getoutput type.** This method returns an output type object encapsulating the type of output, which is expected.

(3) **getapplication type.** This method returns an application type object encapsulating the type of application to be examined;

(4) **getapplication location.** This method returns an application location object encapsulating the path to the executable application code to run.

In operation configuration manager 230 expects a configuration file to be present in the default path for example, as shown in Table 2. Representatively, configuration manager 231 abstracts the fetching of configuration settings.

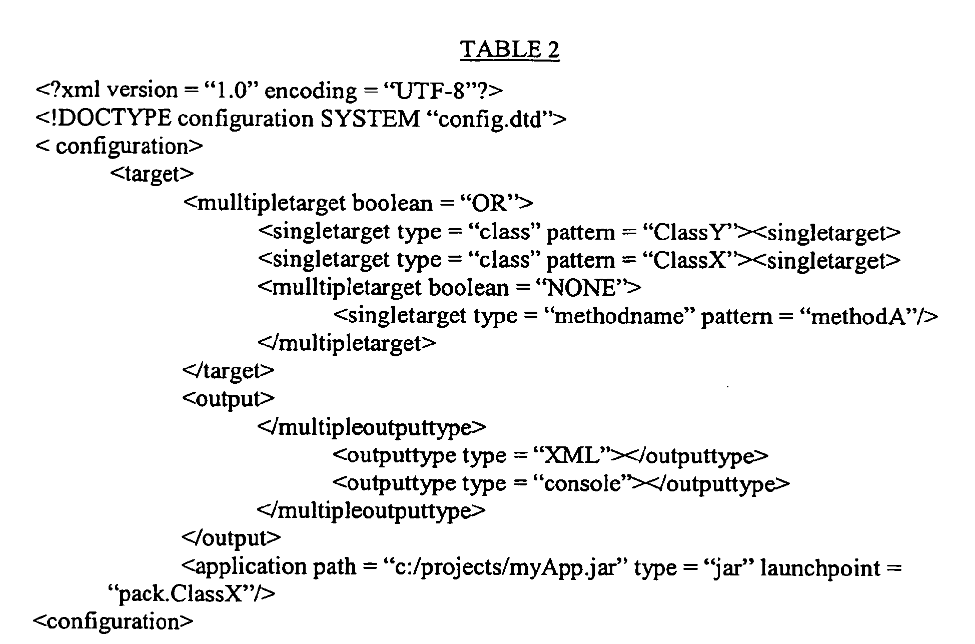

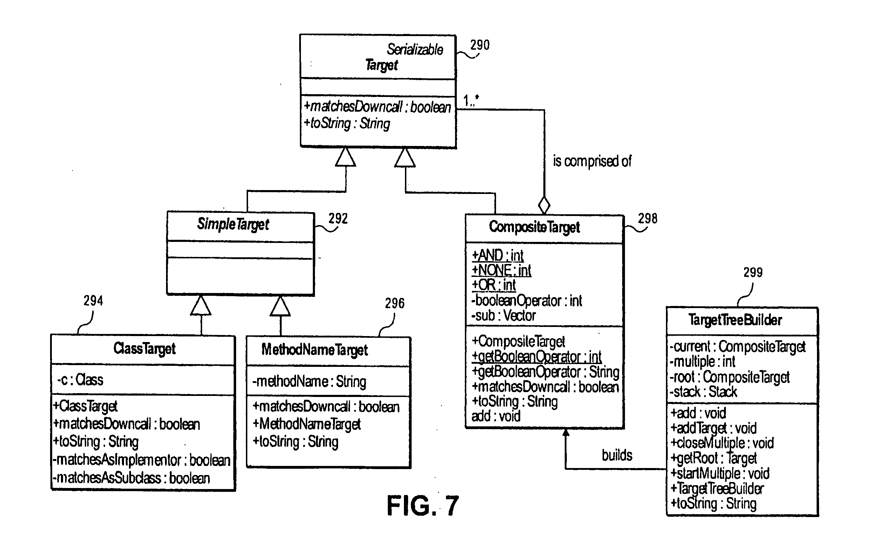

FIG. 7 illustrates class diagrams for implementing target 290. The various class target diagrams include simple target 292, which is based on class target 294, and method name target 296. Accordingly, as illustrated with reference to FIG. 7, a target 290 may be directed to a class of objects or limited to a specific method named target. Target 290 also includes composite target 298, which is built using target tree builder 299.

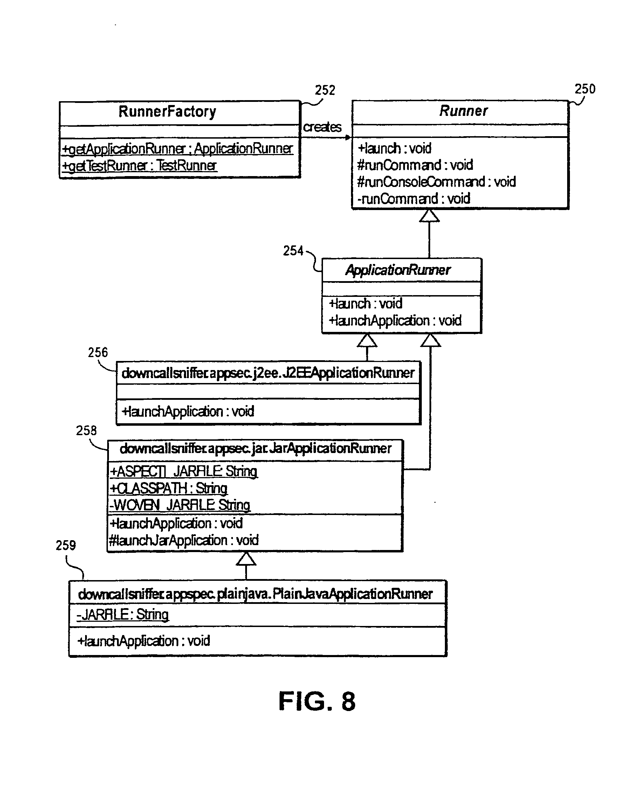

FIG. 8 illustrates class diagrams for implementing runner 250, as illustrated in FIGS. 2-4. Runner 250 is generated using runner factory 252, as well as application runner 254, which relies on various downcall sniffer files. Application runner 220 (FIG. 2) interface is used by behavior sniffer 210 to launch a program and keep the program running, looping through some kind of operational state in which the program works and its behavior can be observed. Featured services of application runner interface 220 include:
• **launch application** used to activate the input program

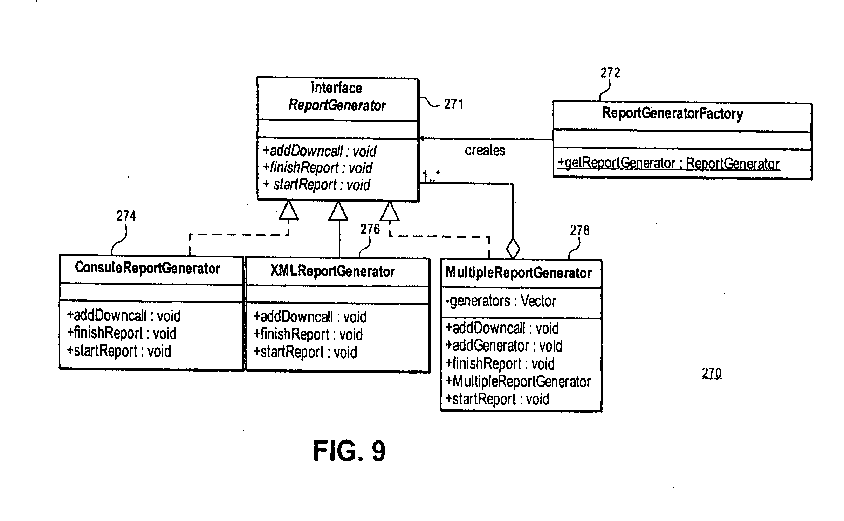

FIG. 9 illustrates class diagrams for providing report generator 270, and specifically, an interface 271 for report generator to provide the add downcall, finish report and start report functions. Representatively, report interface 271 offers services to different sniffer components for writing the information extracted regarding detected downcalls to a certain output. Accordingly, in one embodiment, report interface 271 provides a straightforward way to have a single access point for report generation. It provides loose coupling between the active sniffing components and the report generation. New output report generators should just implement this interface to be available. Featured services of the report interface include:
• **start report, finish report** used to initialize and finalize the report
• **add downcall** used to add a downcall item to the report

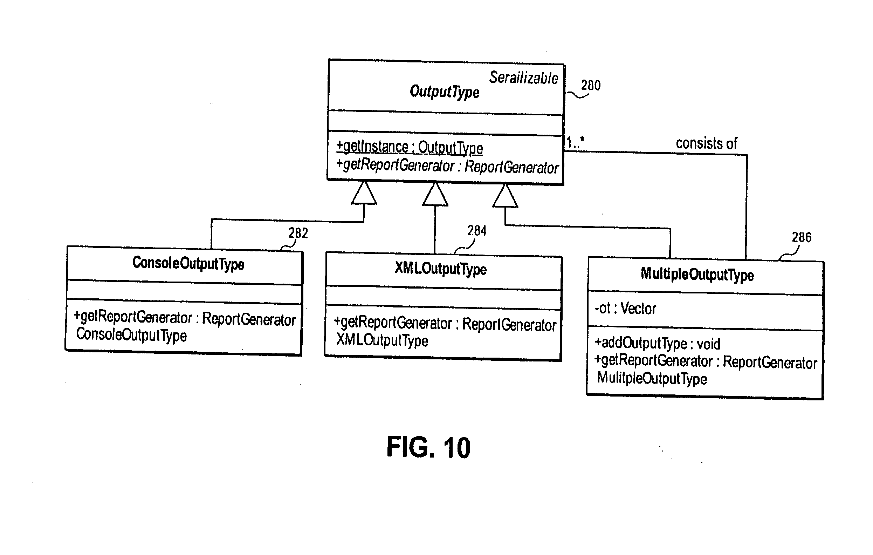

Finally, FIG. 10 illustrates class diagrams to provide the output type to generate the report for detected downcalls. Accordingly, the advantages of examining the behavior (opposed to examining the code) is the advanced form of tracing it provides. The method call matching the target is registered and a report with its corresponding stack-trace, which means that the application extracts the path from a first method through a succession of method calls to a calling method, which invokes the program target or called method. Accordingly, one embodiment provides a new way of automatically scanning a product for certain types of function calls without having to go through all program code by hand.

In one embodiment, the AOP approach also allows the detection of parameters passed during the execution of the application, which is generally information that cannot be extracted at runtime. In one embodiment, such information may be used for redesigning an existing application for improving, for example, security or manageability, which is greatly simplified if the application can be scanned, as described herein. For example, if one would like to enforce security policies to a certain type of method, the downcall report can point out where all those method calls occur (in which higher level calls invoked in). As a result, adding security functionality on the appropriate locations is only a matter of describing the target and adding the functionality, while avoiding an extensive study of the source code.

### Alternate Embodiments

Several aspects of one implementation of the downcall sniffer for providing a report including detected downcalls have been described. Features can be implemented for downcall detection within a multi-layered application or for a distributed application in different embodiment implementations. In addition, the foregoing description, for purposes of explanation, used specific nomenclature to provide a thorough understanding of the embodiments of the invention. However, it will be apparent to one skilled in the art that the specific details are not required in order to practice the embodiments of the invention.

In addition, although an embodiment described herein is directed to a downcall detection, it will be appreciated by those skilled in the art that the embodiments of the present invention can be applied to other systems. In fact, systems for generating test data to invoke each method within an application fall within the embodiments of the present invention, as defined by the appended claims. The embodiments described above were chosen and described in order to best explain the principles of the embodiments of the invention and its practical applications.

It is to be understood that even though numerous characteristics and advantages of various embodiments of the present invention have been set forth in the foregoing description, together with details of the structure and function of various embodiments of the invention, this disclosure is illustrative only. In some cases, certain subassemblies are only described in detail with one such embodiment. Nevertheless, it is recognized and intended that such subassemblies may be used in other embodiments of the invention. Changes may be made in detail, especially matters of structure and management of parts within the principles of the embodiments to the full extent indicated by the broad general meaning of the terms in which the appended claims are expressed.

Having disclosed exemplary embodiments and the best mode, modifications and variations may be made to the disclosed embodiments while remaining within the scope of the embodiments of the invention as defined by the following claims.

According to one aspect of the invention, there is provided a method, comprising:
observing, during execution of an input program, the behavior of the input program according to at least one program target; and
generating a report to identify access to underlying layers of the input program directed to the at least one program target.

Preferably, observing the behavior further comprises:
detecting a method call directed to the program target within a calling method;
determining a stack trace for the detected method call; and
registering the detected method call and stack trace.

Further preferably, determining the stack trace further comprises extracting a path from a method within an upper layer of the input program to the calling method to invoke the program target.

Preferably, the program target is one of a service, a method, a class and a resource.

Further preferably, prior to observing, the method further comprises accessing a configuration file to determining the at least one program target and a report format.

Preferably, observing the behavior further comprises:
checking each method invocation issued by the input program against the at least one program target; and
identifying each issued method invocation directed to the program target.

Further preferably, identifying each issued method invocation further comprises:
outputting, for each identified method invocation, a signature of a calling method that issued the identified method invocation, a signature of a called method by the method invocation and arguments passed to the called method.
Preferably, prior to observing the behavior, the method further comprises:
   creating at least one aspect within the input program to identify each downcall issued during execution of the input program and direct to the program target; and
   adding advice to the at least one aspect within the input program to export a path from a method within an upper layer of the input program to the calling method that invoked the program target.

Further preferably, creating at least one aspect further comprises inserting a point cut within at least one method of the input program to check the method against the program target.

Preferably, creating at least one aspect further comprises inserting a point cut within each method of the input program to check each call issued by each method against the program target.

According to a further aspect of the present invention, there is provided a method, comprising:
executing an input program;
identifying each downcall issued by the input program to at least one program target within an underlying layer of the input program; and
outputting, for each identified downcall, a signature of a calling module that issued the identified downcall, a signature of a called module by the identified module invocation and arguments passed to the called module.

Preferably, prior to executing the input program, the method further comprises:
creating at least one aspect within the input program to identify each downcall issued during execution of the input program and direct to the program target; and
adding advice to the at least one aspect within the input program to export a path from a method within an upper layer of the input program to the calling method that invoked the program target.

Further preferably, creating at least one aspect further comprises inserting a point cut within at least one method of the input program to check the method against the program target.

Preferably, creating at least one aspect further comprises inserting a point cut within each method of the input program to check each call issued by each method against the program target.

Further preferably, outputting further comprises generating a report to identify access to underlying layers of the input program directed to the at least one program target.

Preferably, a downcall comprises a call to a called method within a body of a calling method.

According to another aspect of the invention, there is provided a machine accessible medium including instructions that when executed cause the machine to:
execute an input program;
identify each downcall issued by the input program to at least one program target within an underlying layer of the input program; and
output, for each identified downcall, a signature of a calling module that issued the identified downcall, a signature of a called module by the identified module invocation and arguments passed to the called module.

Preferably, prior to executing the input program, the machines is further to:
create at least one aspect within the input program to identify each downcall issued during execution of the input program and direct to the program target; and
add advice to the at least one aspect within the input program to export a path from a method within an upper layer of the input program to the calling method that invoked the program target.

Further preferably, to create at least one aspect, the machine is further to:
insert a point cut within at least one method of the input program to check the method against the program target.

Preferably, to create the at least one aspect, the machine is further to:
insert a point cut within each method of the input program to check each call issued by each method against the program target.

Further preferably, to output, the machine is further to:
generate a report to identify access to underlying layers of the input program directed to the at least one program target.

According to another aspect of the invention, there is provided a machine accessible medium including instructions that when executed cause the machine to:
execute an input program;
observe the behavior of the input program according to at least one program target; and
generate a report to identify access to underlying layers of the input program directed to the at least one program target.

Preferably, to observe the behavior, the machine is further to:
detect a method call directed to the program target within a calling method;
determine a stack trace for the detected method call; and
register the detected method call and stack trace.

Further preferably, to determine the stack trace, the machine is further to:
extract a path from a method within an upper layer of the input program to the calling method to invoke the program target.

Preferably, to observe the behavior, the machine is further to:
check each method invocation issued by the input program against the at least one program target; and
identify each issued method invocation directed to the program target.

Further preferably, to identify each issued method invocation, the machine is further to:
output, for each identified method invocation, a signature of a calling method that issued the identified method invocation, a signature of a called method by the method invocation and arguments passed to the called method.

According to another aspect of the invention, there is provided a system, comprising:
an execution module to execute an input program;
a downcall module to detect each downcall issued by the input program and directed to at one user supplied program target; and
a report module to output, for each identified downcall, a signature of a calling module that issued the identified downcall, a signature of a called module by the identified module invocation and arguments passed to the called module.

Preferably, the system further comprises:
an execution module to execute the input program to invoke each method within the input program

Further preferably, the system further comprisies:
an aspect module to create at least one aspect within the input program to identify each downcall issued during execution of the input program and direct to the program target.

Preferably, the aspect module is further to adding advice to the at least one aspect within the input program to export a path from a method within an upper layer of the input program to the calling method that invoked the program target.

## Claims

1. A computer implemented method, comprising:
observing, during execution of an input program, the behavior of the input program according to at least one program target (290); and
generating a report (301),
**characterized in that** the report (301) is generated to identify access to underlying layers of the input program directed to the at least one program target (290),
wherein prior to observing the behavior, the method further comprises:
creating at least one aspect within the input program to identify each downcall (310) issued during execution of the input program and directed to the program target (290);
wherein a downcall (310) is a call to a called method within a body of a calling method;
adding advice to the at least one aspect within the input program to export a path from a method within an upper layer of the input program to the calling method that is directed to the program target (290), and,
wherein observing the behavior further comprises:
checking each method call issued by the input program against the at least one program target (290);
identifying each issued method call directed to the program target (290);
detecting a method call directed to the program target (290) within a calling method;
determining a stack trace for the detected method call; and
registering the detected method call matching the target (290) and a report with its corresponding stack trace;
wherein identifying each issued method call further comprises:
outputting, for each identified downcall (310), a signature of a calling method that issued the identified downcall (310), a signature of a called method by the identified method call, and arguments passed to the called method.

2. The method of claim 1, wherein determining the stack trace further comprises extracting a path from a method within an upper layer of the input program to the calling method to invoke the program target (290).

3. The method of anyone of the preceding claims, wherein the program target (290) is one of a service, a method, a class and a resource.

4. The method of anyone of the preceding claims, wherein prior to observing, the method further comprises accessing a configuration file to determining the at least one program target (290) and a report format.

5. The method of anyone of the preceding claims, wherein creating at least one aspect further comprises inserting a point cut within at least one method of the input program to check the method against the program target (290), and/or
inserting a point cut within each method of the input program to check each call issued by each method against the program target (290).

6. A machine accessible medium including instructions that when executed cause the machine to:
execute an input program;
observe the behavior of the input program according to at least one program target (290); and
generate a report (301)
**characterized in that** the report (301) is generated to identify access to underlying layers of the input program directed to the at least one program target (290),
wherein prior to observing the behavior, the machine accessible medium further includes instructions to cause the machine to
create at least one aspect within the input program to identify each downcall (310) issued during execution of the input program and directed to the program target (290);
wherein a downcall (310) is a call to a called method within a body of a calling method;
add advice to the at least one aspect within the input program to export a path from a method within an upper layer of the input program to the calling method that is directed to the program target (290), and
wherein observing the behavior further includes instructions to cause the machine to
check each method call issued by the input program against the at least one program target (290);
identify each issued method call directed to the program target (290);
detect a method call directed to the program target (290) within a calling method;
determine a stack trace for the detected method call; and
register the detected method call matching the target (290) and a report with its corresponding stack trace;
wherein identifying each issued method call further includes instructions to cause the machine to
output, for each identified downcall (310), a signature of a calling method that issued the identified downcall (310), a signature of a called method by the identified method call and arguments passed to the called method.

7. The machine accessible medium of claim 6, wherein to observe the behavior, the machine is further to:
detect a method call directed to the program target (290) within a calling method (340);
determine a stack trace for the detected method call; and
register the detected method call and stack trace.

8. The machine accessible medium of claim 7, wherein to determine the stack trace, the machine is further to:
extract a path from a method within an upper layer of the input program to the calling method (340) to invoke the program target (290).

9. The machine accessible medium of claim 8, wherein to identify each issued method invocation, the machine is further to:
output, for each identified method invocation, a signature of a calling method that issued the identified method invocation, a signature of a called method by the method invocation and arguments passed to the called method.

10. A system, comprising:
an execution module to execute an input program;
**characterized in that** the system further comprises
a downcall module to detect each downcall(310) issued by the input program and directed to at one user supplied program target (290) wherein a downcall (310) is a call to a called method (330) within a body of a calling method (340);
a report module (270) to generate a report (301) to identify access to underlying layers of the input program directed to the at least one program target 8290),
an aspect module to create at least one aspect within the input program to identify each downcall (310) issued during execution of the input program and directed to the program target (290),
wherein the aspect module is further adapted to adding advice to the at least one aspect within the input program to export a path from a method within an upper layer of the input program to the calling method (340) that is directed to the program target (290), and
wherein the system is adapted to check each method call issued by the input program against the at least one program target (290); and
to detect and to identify each issued method call directed to the program target (290) within a calling method,
to determine a stack trace for the detected method call; and
to register the detected method call matching the target (290) and a report with its corresponding stack trace;
wherein the identification of each issued method call further comprises outputting, for each identified downcall (310), a signature of a calling method that issued the identified downcall (310), a signature of a called method by the identified method call, and arguments passed to the called method.

11. The system of claim 10, further comprising:
an execution module to execute the input program to invoke each method within the input program.

## Patentansprüche

1. Computerimplementiertes Verfahren, das umfasst:
während der Ausführung eines Eingabeprogramms Beobachten des Verhaltens des Eingabeprogramms gemäß zumindest einem Programmziel (290); und
Erzeugen eines Berichts (301),
**dadurch gekennzeichnet, dass** der Bericht (301) erzeugt wird, um den Zugriff auf darunter liegende Schichten des Eingabeprogramms zu identifizieren, der an das zumindest eine Programmziel (290) adressiert ist,
wobei das Verfahren vor dem Beobachten des Verhaltens ferner umfasst:
Erzeugen zumindest eines Aspekts innerhalb des Eingabeprogramms, um jeden Abwärtsaufruf (310) zu identifizieren, der während der Ausführung des Eingabeprogramms ausgegeben wird und an das Programmziel (290) adressiert ist;
wobei ein Abwärtsaufruf (310) ein Aufruf einer aufgerufenen Methode innerhalb eines Hauptteils einer aufrufenden Methode ist;
Hinzufügen eines Hinweises zu dem zumindest einen Aspekt in dem Eingabeprogramm, um einen Pfad von einer Methode innerhalb einer höheren Schicht des Eingabeprogramms zu der aufrufenden Methode, die an das Programmziel (290) adressiert ist, zu exportieren, und
wobei das Beobachten des Verhaltens ferner umfasst:
Prüfen jedes von dem Eingangsprogramm ausgegebenen Methodenaufrufs gegen das zumindest eine Programmziel (290);
Identifizieren jedes ausgegebenen Methodenaufrufs, der an das Programmziel (290) adressiert ist;
Erfassen eines Methodenaufrufs, der an das Programmziel (290) adressiert ist, innerhalb einer aufrufenden Methode;
Bestimmen einer Stapelablaufverfolgung für den erfassten Methodenaufruf; und
Registrieren des erfassten Methodenaufrufs, der zu dem Ziel (290) passt, und eines Berichts mit seiner entsprechenden Stapelablaufverfolgung;
wobei das Identifizieren jedes ausgegebenen Methodenaufrufs ferner umfasst:
für jeden identifizierten Abwärtsaufruf (310) Ausgeben einer Signatur einer aufrufenden Methode, die den identifizierten Abwärtsaufruf (310) ausgegeben hat, einer Signatur einer durch den identifizierten Methodenaufruf aufgerufenen Methode und der an die aufgerufene Methode weitergegebenen Argumente.

2. Verfahren nach Anspruch 1, wobei das Bestimmen der Stapelablaufverfolgung ferner das Extrahieren eines Pfads von einer Methode innerhalb einer höheren Schicht des Eingabeprogramms zu der aufrufenden Methode umfasst, um das Programmziel (290) aufzurufen.

3. Verfahren nach einem der vorangehenden Ansprüche, wobei das Programmziel (290) entweder ein Dienst, eine Methode, eine Klasse oder eine Ressource ist.

4. Verfahren nach einem der vorangehenden Ansprüche, wobei das Verfahren vor dem Beobachten ferner das Zugreifen auf eine Konfigurationsdatei umfasst, um das zumindest eine Programmziel (290) und ein Berichtsformat zu bestimmen.

5. Verfahren nach einem der vorangehenden Ansprüche, wobei das Erzeugen zumindest eines Aspekts ferner das Einfügen eines Pointcuts innerhalb der zumindest einen Methode des Eingabeprogramms umfasst, um die Methode gegen das Programmziel (290) zu prüfen, und/oder
das Einfügen eines Pointcuts innerhalb jeder Methode des Eingabeprogramms, um jeden von jeder Methode ausgegebenen Aufruf gegen das Programmziel (290) zu prüfen.

6. Maschinenzugreifbares Medium mit Anweisungen, welche die Maschine bei Ausführung dazu bringen:
ein Eingabeprogramm auszuführen;
das Verhalten des Eingabeprogramms gemäß zumindest einem Programmziel (290) zu beobachten; und
einen Bericht (301) zu erzeugen,
**dadurch gekennzeichnet, dass** der Bericht (301) erzeugt wird, um den Zugriff auf darunter liegende Schichten des Eingabeprogramms zu identifizieren, der an das zumindest eine Programmziel (290) adressiert ist,
wobei das maschinenzugreifbare Medium vor dem Beobachten des Verhaltens ferner Anweisungen umfasst, um die Maschine dazu zu bringen:
zumindest einen Aspekt innerhalb des Eingabeprogramms zu erzeugen, um jeden Abwärtsaufruf (310) zu identifizieren, der während der Ausführung des Eingabeprogramms ausgegeben wird und an das Programmziel adressiert (290) ist;
wobei ein Abwärtsaufruf (310) ein Aufruf einer aufgerufenen Methode innerhalb eines Hauptteils einer aufrufenden Methode ist;
einen Hinweis zu dem zumindest einen Aspekt in dem Eingabeprogramm hinzuzufügen, um einen Pfad von einer Methode innerhalb einer höheren Schicht des Eingabeprogramms zu der aufrufenden Methode, die an das Programmziel (290) adressiert ist, zu exportieren, und
wobei das Beobachten des Verhaltens ferner Anweisungen umfasst, um die Maschine dazu zu bringen:
jeden von dem Eingabeprogramm ausgegebenen Methodenaufruf gegen das zumindest eine Programmziel (290) zu prüfen;
jeden ausgegebenen Methodenaufruf, der an das Programmziel (290) adressiert ist, zu identifizieren;
einen Methodenaufruf, der an das Programmziel (290) adressiert ist, innerhalb einer aufrufenden Methode zu erfassen;
eine Stapelablaufverfolgung für den erfassten Methodenaufruf zu bestimmen; und
den erfassten Methodenaufruf, der zu dem Ziel (290) passt, und einen Bericht mit seiner entsprechenden Stapelablaufverfolgung zu registrieren;
wobei das Identifizieren jedes ausgegebenen Methodenaufrufs ferner Anweisungen umfasst, um die Maschine dazu zu bringen:
für jeden identifizierten Abwärtsaufruf (310) eine Signatur einer aufrufenden Methode, die den identifizierten Abwärtsaufruf (310) ausgegeben hat, eine Signatur einer durch den identifizierten Methodenaufruf aufgerufenen Methode und an die aufgerufene Methode weitergegebene Argumente auszugeben.

7. Maschinenzugreifbares Medium nach Anspruch 6, wobei die Maschine zum Beobachten des Verhaltens ferner:
einen an das Programmziel (290) adressierten Methodenaufruf innerhalb einer aufrufenden Methode (340) erfassen soll;
eine Stapelablaufverfolgung für den erfassten Methodenaufruf bestimmen soll; und
den erfassten Methodenaufruf und die Stapelablaufverfolgung registrieren soll.

8. Maschinenzugreifbares Medium nach Anspruch 7, wobei die Maschine zur Bestimmung der Stapelablaufverfolgung ferner:
einen Pfad aus einer Methode innerhalb einer höheren Schicht des Eingabeprogramms zu dem aufrufenden Verfahren extrahieren soll, um das Programmziel (290) aufzurufen.

9. Maschinenzugreifbares Medium nach Anspruch 8, wobei die Maschine zum Identifizieren jedes ausgegebenen Methodenaufrufs ferner
für jeden identifizierten Methodenaufruf eine Signatur einer aufrufenden Methode, die den identifizierten Methodenaufruf ausgegeben hat, eine Signatur einer durch den Methodenaufruf aufgerufenen Methode und an die aufgerufene Methode weitergegebene Argumente ausgeben soll.

10. System, das umfasst:
ein Ausführungsmodul zum Ausführen eines Eingabeprogramms;
**dadurch gekennzeichnet, dass** das System ferner umfasst:
ein Abwärtsaufrufmodul zum Erfassen jedes Abwärtsaufrufs (310), der von dem Eingabeprogramm ausgegeben wird und an ein vom Benutzer geliefertes Programmziel (290) adressiert ist, wobei ein Abwärtsaufruf (310) ein Aufruf einer aufgerufenen Methode (330) innerhalb eines Hauptteils einer aufrufenden Methode (340) ist;
ein Berichtsmodul (270) zum Erzeugen eines Berichts (301), um den Zugriff auf darunter liegende Schichten des Eingabeprogramms zu identifizieren, der an das zumindest eine Programmziel (290) adressiert ist;
ein Aspektmodul zum Erzeugen zumindest eines Aspekts in dem Eingabeprogramm, um jeden Abwärtsaufruf (310) zu identifizieren, der während der Ausführung des Eingabeprogramms ausgegeben wird und an das Programmziel (290) adressiert ist,
wobei das Aspektmodul ferner geeignet ist, einen Hinweis zu dem zumindest einen Aspekt innerhalb des Eingabeprogramms hinzuzufügen, um einen Pfad von einer Methode innerhalb einer höheren Schicht des Eingabeprogramms zu der aufrufenden Methode (340), die an das Programmziel (290) adressiert ist, zu exportieren, und
wobei das System geeignet ist, jeden von dem Eingabeprogramm ausgegebenen Methodenaufruf gegen das zumindest eine Programmziel (290) zu prüfen; und
jeden ausgegebenen Methodenaufruf, der an das Programmziel (290) adressiert ist, innerhalb einer aufrufenden Methode zu erfassen und zu identifizieren,
eine Stapelablaufverfolgung für den erfassten Methodenaufruf zu bestimmen; und
den erfassten Methodenaufruf, der zu dem Ziel (290) passt, und einen Bericht mit seiner entsprechenden Stapelablaufverfolgung zu registrieren;
wobei die Identifikation jedes ausgegebenen Methodenaufrufs ferner für jeden identifizierten Abwärtsaufruf (310) das Ausgeben einer Signatur einer aufrufenden Methode, die den identifizierten Abwärtsaufruf (310) ausgegeben hat, einer Signatur einer durch den identifizierten Methodenaufruf aufgerufenen Methode und der an die aufgerufene Methode weitergegebenen Argumente umfasst.

11. System nach Anspruch 10, das ferner umfasst:
ein Ausführungsmodul zum Ausführen des Eingabeprogramms, um jede Methode innerhalb des Eingabeprogramms aufzurufen.

## Revendications

1. Procédé mis en oeuvre par ordinateur, comprenant :
observer, pendant l'exécution d'un programme d'entrée, le comportement du programme d'entrée en fonction d'au moins une cible de programme (290) ; et
générer un rapport (301),
**caractérisé en ce que** le rapport (301) est généré pour identifier l'accès à des couches sous-jacentes du programme d'entrée dirigé vers l'au moins une cible de programme (290),
dans lequel avant d'observer le comportement, le procédé comprend en outre :
créer au moins un aspect dans le programme d'entrée pour identifier chaque appel descendant (310) émis au cours de l'exécution du programme d'entrée et dirigé vers la cible de programme (290) ;
dans lequel un appel descendant (310) est un appel à une méthode appelée dans un corps d'une méthode appelante ;
ajouter des conseils à l'au moins un aspect dans le programme d'entrée pour exporter un chemin d'une méthode dans une couche supérieure du programme d'entrée vers la méthode appelante qui est dirigé vers la cible de programme (290), et,
dans lequel observer le comportement comprend en outre :
vérifier chaque appel de méthode émis par le programme d'entrée par rapport à l'au moins une cible de programme (290) ;
identifier chaque appel de méthode émis dirigé vers la cible de programme (290) ;
détecter un appel de méthode dirigé vers la cible de programme (290) dans une méthode appelante ;
déterminer une trace de pile pour l'appel de méthode détecté ; et
enregistrer l'appel de méthode détecté correspondant à la cible (290) et un rapport avec sa trace de pile correspondante ;
dans lequel identifier chaque appel de méthode émis comprend en outre :
délivrer, pour chaque appel descendant identifié (310), une signature d'une méthode appelante qui a émis l'appel descendant identifié (310), une signature d'une méthode appelée par l'appel de méthode identifié, et des arguments passés à la méthode appelée.

2. Procédé selon la revendication 1, dans lequel déterminer la trace de pile comprend en outre extraire un chemin d'une méthode dans une couche supérieure du programme d'entrée vers la méthode appelante pour invoquer la cible de programme (290).

3. Procédé selon l'une quelconque des revendications précédentes, dans lequel la cible de programme (290) est l'un d'un service, d'une méthode, d'une classe et d'une ressource.

4. Procédé selon l'une quelconque des revendications précédentes, dans lequel avant d'observer, le procédé comprend en outre accéder à un fichier de configuration pour déterminer l'au moins une cible de programme (290) et un format de rapport.

5. Procédé selon l'une quelconque des revendications précédentes, dans lequel créer au moins un aspect comprend en outre insérer un point de coupe dans au moins une méthode du programme d'entrée pour contrôler la méthode par rapport à la cible de programme (290), et/ou
insérer un point de coupe à l'intérieur de chaque méthode du programme d'entrée pour contrôler chaque appel émis par chaque méthode par rapport à la cible de programme (290).

6. Support accessible par machine comprenant des instructions qui lorsqu'elles sont exécutées amènent la machine à :
exécuter un programme d'entrée ;
observer le comportement du programme d'entrée en fonction d'au moins une cible de programme (290) ; et
générer un rapport (301),
**caractérisé en ce que** le rapport (301) est généré pour identifier l'accès à des couches sous-jacentes du programme d'entrée dirigé vers l'au moins une cible de programme (290),
dans lequel avant l'observation du comportement, le support accessible par machine comprend en outre des instructions pour amener la machine à :
créer au moins un aspect dans le programme d'entrée pour identifier chaque appel descendant (310) émis au cours de l'exécution du programme d'entrée et dirigé vers la cible de programme (290) ;
dans lequel un appel descendant (310) est un appel d'une méthode appelée dans un corps d'une méthode appelante ;
ajouter des conseils à l'au moins un aspect dans le programme d'entrée pour exporter un chemin d'une méthode dans une couche supérieure du programme d'entrée vers la méthode appelante qui est dirigé vers la cible de programme (290), et
dans lequel l'observation comprend en outre des instructions pour amener la machine à :
vérifier chaque appel de méthode émis par le programme d'entrée par rapport à l'au moins une cible de programme (290) ;
identifier chaque appel de méthode émis dirigé vers la cible de programme (290) ;
détecter un appel de méthode dirigé vers la cible de programme (290) dans une méthode appelante ;
déterminer une trace de pile pour l'appel de méthode détecté ; et
enregistrer l'appel de méthode détecté correspondant à la cible (290) et un rapport avec sa trace de pile correspondante ;
dans lequel l'identification de chaque appel de méthode émis comprend en outre des instructions pour amener la machine à :
délivrer, pour chaque appel descendant identifié (310), une signature d'une méthode appelante qui a émis l'appel descendant identifié (310), une signature d'une méthode appelée par l'appel de méthode identifié, et des arguments passés à la méthode appelée.

7. Support accessible par machine selon la revendication 6, dans lequel pour observer le comportement, la machine est en outre amenée à :
détecter un appel de méthode dirigé vers la cible de programme (290) dans une méthode appelante (340) ;
déterminer une trace de pile pour l'appel de méthode détecté ; et
enregistrer l'appel de méthode détecté et la trace de pile.

8. Support accessible par machine selon la revendication 7, dans lequel pour déterminer la trace de pile, la machine est amenée à :
extraire un chemin d'une méthode dans une couche supérieure du programme d'entrée vers la méthode appelante (340) pour invoquer la cible de programme (290).

9. Support accessible par machine selon la revendication 8, dans lequel pour identifier chaque invocation de méthode appelé, la machine est amenée à :
délivrer, pour chaque invocation de méthode identifié, une signature d'une méthode appelante qui a émis l'invocation de méthode identifié, une signature d'une méthode appelée par l'invocation de méthode et des arguments passés à la méthode appelée.

10. Système comprenant :
un module d'exécution pour exécuter un programme d'entrée ;
**caractérisé en ce que** le système comprend en outre :
un module d'appel descendant pour détecter chaque appel descendant (310) émis par le programme d'entrée et dirigé vers au moins une cible de programme fournie par l'utilisateur (290), dans lequel un appel descendant (310) est un appel d'une méthode appelée (330) dans un corps d'une méthode appelante (340) ;
un module de rapport (270) pour générer un rapport (301) pour identifier l'accès à des couches sous-jacentes du programme d'entrée dirigé vers l'au moins une cible de programme (290),
un module d'aspect pour créer au moins un aspect dans le programme d'entrée pour identifier chaque appel descendant (310) émis pendant l'exécution du programme d'entrée et dirigé vers la cible de programme (290),
dans lequel le module d'aspect est en outre adapté pour ajouter des conseils à l'au moins un aspect dans le programme d'entrée pour exporter un chemin d'une méthode dans une couche supérieure du programme d'entrée vers la méthode appelante (340) qui est dirigé vers la cible de programme (290), et
dans lequel le système est adapté pour contrôler chaque appel de méthode émis par le programme d'entrée par rapport à l'au moins une cible de programme (290) ; et
pour détecter et identifier chaque appel de méthode émis dirigé vers la cible de programme (290) à l'intérieur d'une méthode appelante,
pour déterminer une trace de pile pour l'appel de méthode détecté ; et
pour enregistrer l'appel de méthode détecté correspondant à la cible (290) et un rapport avec sa trace de pile correspondante ;
dans lequel l'identification de chaque appel de méthode émis comprend en outre la délivrance, pour chaque appel descendant identifié (310), d'une signature d'une méthode appelante qui a émis l'appel descendant identifié (310), d'une signature d'une méthode appelée par l'appel de méthode identifié, et des arguments passés au méthode appelé.

11. Système selon la revendication 10, comprenant en outre :
un module d'exécution pour exécuter le programme d'entrée pour invoquer chaque méthode dans le programme d'entrée.
